Europäisches Patentamt

European Patent Office

Office européen des brevets

(11) Veröffentlichungsnummer: **0 110 148**
**A1**

(19)

(12) # EUROPÄISCHE PATENTANMELDUNG

(21) Anmeldenummer: 83110765.1

(51) Int. Cl.³: **C 02 F 1/76**

(22) Anmeldetag: **27.10.83**

(30) Priorität: **04.11.82 CH 6410/82**

(71) Anmelder: **LONZA AG, Gampel/Wallis (CH)**

(72) Erfinder: **Franzen, Volker, Prof. Dr.,
C.F.-Meyer-Strasse 32, CH-4002 Basel (CH)**

(43) Veröffentlichungstag der Anmeldung: **13.06.84
Patentblatt 84/24**

(74) Vertreter: **Weinhold, Peter, Dr. et al, Patentanwälte Dr. V.
Schmied-Kowarzik Dipl.-Ing. G. Dannenberg Dr. P.
Weinhold Dr. D. Gudel Dipl.-Ing. S. Schubert Dr. P. Barz
Siegfriedstrasse 8, D-8000 München 40 (DE)**

(84) Benannte Vertragsstaaten: **BE CH DE FR GB IT LI**

(54) Verfahren zur Entkeimung von Wasser.

(57) Wasser wird zu dessen Entkeimung mit chlorbeladenen
Trägerfeststoff-Teilen, vorzugsweise Zeolith, behandelt.

EP 0 110 148 A1

Die Erfindung betrifft ein Verfahren und ein Mittel zur Entkeimung von Wasser mit Chlor.

Es ist bekannt, im Wasser enthaltene bakterielle Verunreinigungen mit Chlor zu zerstören. Der dazu erforderliche Chlorzusatz kann durch Chlorgas, Natriumhypochlorit-Lauge, feste Hypochlorite, Chlordioxid-Lösung und organische Chlorverbindungen erfolgen.

Diese bekannten Verfahren weisen verschiedene Nachteile bezüglich Handhabung und Toxizität auf. Bei der Anwendung von Hypochloriten verbleibt das Alkali- bzw. Erdalkalihydroxid im Wasser.

Aufgabe der vorliegenden Erfindung ist ein Verfahren und ein Mittel vorzuschlagen, die es ermöglichen, diese Nachteile zu vermeiden.

Erfindungsgemäss wird das mit einem Verfahren nach Patentanspruch 1 erreicht.

Als Trägerfeststoff-Teile können Molekularsiebe, zweckmässig Zeolith, Kieselgel, Aktivkohle, Aktivtonerde oder poröse keramische Körper angewendet werden.

Zur Ausführung des Verfahrens kann beispielsweise ein natürlicher oder künstlicher Zeolith, zweckmässig in NA- oder H-Form, bevorzugt Mordenit-Typ, mit Chlorgas in Berührung gebracht werden, wobei sich der Zeolith mit dem Chlor belädt. Je nach Art des Zeoliths ist es möglich, eine Chlormenge von bis zu 12 Gew.% im Zeolith aufzunehmen.

Der Zeolith kann in gebrochener Form als Block, Granulat oder Pulver eingesetzt werden.

Der chlorbeladene Zeolith kann dann in das kontaminierte, zu behandelnde Wasser gegeben werden, wobei das Wasser durch ein Zeolith-Bett strömen kann oder der Zeolith im ruhenden Wasser zugegeben werden kann.

Sobald der Chlorgehalt erschöpft ist, kann der Zeolith aus dem Wasser entfernt und nach eingehender Trocknung erneut mit Chlorgas beladen werden.

Es ist auch möglich, den Zeolith erst mit Chlor zu beladen, dann im gleichen Strömungskanal das Wasser zu behandeln und nach Erschöpfung des Chlors im Zeolith wieder Chlor in den Zeolith zu leiten.

Es stellt sich ein Gleichgewicht ein. Wird die Menge beladener Zeolith pro Liter Wasser reduziert, so ist bei geringerer Zeolithmenge die Chlorabgabe schnell.

Sinngemäss können die anderen genannten Trägerfeststoff-Teile eingesetzt werden.

Die Erfindung umfasst auch mit Chlorgas beladene Trägerfeststoff-Teile als Mittel zum Entkeimen von Wasser.

Beispiel 1

Ein Zeolith Typ A, Porenweite 40 nm, in Natriumform, wird mit Chlor beladen. Ein mit 20,2 g Chlor pro 100 g beladener Zeolith wird in 1 Liter Wasser gegeben und nach 2 Stunden die Chlorabgabe bestimmt:

| Menge Zeolith/Liter Wasser | % gelöste Chlormenge auf angebotene Chlormenge |
|---|---|
| 1.0 g | 94.5 |
| 2.2 g | 78.8 |
| 11.0 g | 56.0 |

Dasselbe nach 10 Stunden:

| Menge Zeolith/Liter Wasser | % gelöstes Chlor in theor. Menge |
|---|---|
| 1.0 g | 95.0 |
| 2.2 g | 82.4 |
| 11.0 g | 60.0 |

Beispiel 2

Ein Zeolith Typ X, Porenweite 0,9 nm, in Natriumform, wird bei 1 bar mit Chlor beladen. Die Beladung geschieht in der Weise, dass der Zeolith zunächst im Vakuum entwässert und entgast wird und dann in das den Zeolith enthaltende Gefäss Chlor eingeleitet wird. Das Gefäss wird gekühlt, um die entstehende Wärme abzuführen. Nach 15 Minuten ist die Beladung beendet. Die Chloraufnahme beträgt 30,2 g Chlor pro 100 g Zeolith.

11,1 g eines derart beladenen Zeoliths werden in 1 Liter Wasser gegeben und die Chlorabgabe durch Titration verfolgt.

| Chlorabgabe g/Liter | Zeit |
|---|---|
| 1.2 | 10 Minuten |
| 1.4 | 1 Stunde |
| 1.83 | 10 Stunden |
| 2.46 | 50 Stunden |

Eine Probe des beladenen Zeoliths wird 3 Monate in einem verschlossenen Gefäss bei Raumtemperatur gelagert und danach die Chlorabgabe gemessen.

| Chlorabgabe g/Liter | Zeit |
|---|---|
| 1.17 | 10 Minuten |
| 1.30 | 1 Stunde |
| 1.76 | 10 Stunden |
| 2.38 | 50 Stunden |

Beispiel 3

Ein Zeolith Typ A, Porenweite 0,4 nm, in Natriumform, wird bei 1 bar mit Chlor beladen. Die Beladung geschieht in der Weise, dass der Zeolith zunächst im Vakuum entwässert und entgast wird und dann Chlor in das Gefäss eingeleitet wird.

Das Gefäss wird gekühlt, um die entstehende Wärme abzuführen. Nach 10 Minuten ist die Beladung beendet. Die Chloraufnahme bei 15°C beträgt 28,2 g Chlor pro 100 g Zeolith.

11,1 g eines derart beladenen Zeoliths werden in 1 Liter Wasser bei Raumtemperatur gegeben. Die Chlorabgabe wird durch Titration verfolgt.

| Chlorabgabe g/Liter | Zeit |
|---|---|
| 0.42 | 10 Minuten |
| 0.9 | 1 Stunde |
| 1.32 | 10 Stunden |
| 1.56 | 20 Stunden |
| 2.22 | 100 Stunden |
| 2.40 | 400 Stunden |

Eine Probe des beladenen Zeoliths wird 3 Monate in einem verschlossenen Gefäss bei Raumtemperatur gelagert und danach die Chlorabgabe gemessen.

| Chlorabgabe g/Liter | Zeit |
|---|---|
| 0.4 | 10 Minuten |
| 0.82 | 1 Stunde |
| 1.20 | 10 Stunden |
| 2.0 | 100 Stunden |

Beispiel 4

Ein engporiges Kieselgel, Porenweite 2,5 nm, Porenvolumen kleiner als 0,5 cm$^3$/g wird bei 1 bar mit Chlor beladen.

Die Chloraufnahme beträgt 34,6 g pro 100 g Kieselgel bei 15°C und 1 bar Chlor.

10 g eines derart Kieselgels werden in 1 Liter Wasser bei Raumtemperatur gegeben und die Chlorabgabe durch Titration verfolgt.

| Chlorabgabe g/Liter | % der Theorie | Zeit |
|---|---|---|
| 1.48 | 58 | 10 Minuten |
| 2.36 | 92 | 1 Stunde |
| 2.42 | 95 | 2 Stunden |
| 2.48 | 97 | 5 Stunden |
| 2.46 | 96 | 10 Stunden |

Vergleichsbeispiele

Aus der DE-OS 24 40 181 ist bekannt, Flüssigkeiten zu ozonisieren, indem poröse Trägerfeststoff-Teile, beispielsweise Zeolith, mit Ozon beladen werden. Diese ozonbeladenen Träger werden der zu ozonisierenden Flüssigkeit zugeführt, wobei das adsorbierte Ozon an die Flüssigkeit abgegeben wird.

Es wurde versucht, dieses Verfahren nachzuvollziehen.

- Vergleichsbeispiel 1:

Versuche mit Ozon:

20 g kugelförmiger Zeolith, Porenweite 0,4 nm, Typ A in Natriumform, werden bei - 10°C mit einem Sauerstoffstrom (30 1/h Gasstrom), welcher etwa 4 Vol. % Ozon enthält, während 30 min begast. Der Zeolith nimmt eine leicht gelbliche Farbe an.

Nach der Ozonbehandlung wird 1 min mit Sauerstoff gespült; dabei entfärbt sich der Zeolith weitgehend.

Um den Ozongehalt im Zeolith zu bestimmen, wurde er in eine KJ-Lösung gegeben. Der Ozongehalt im Zeolith ist praktisch Null.

- Vergleichsbeispiel 2:

20 g Silicagel werden bei - 10°C mit einem ozonhaltigen Sauerstoffstrom begast. Der Ozongehalt beträgt 4 Vol. %, der Gasfluss 30 l/h. Das Silicagel färbt sich nach wenigen Minuten bläulich. Die Farbe verstärkt sich während der nächsten 10 min. Nach 30 min ist die Begasung beendet, es wird während 2 min mit Sauerstoff gespült. Dabei entfärbt sich das Silicagel vollständig. Nachher ist im Silicagel jodometrisch kein Ozon nachweisbar.

Da sich die Trägerfeststoff-Teile praktisch nicht mit dem Ozon beladen lassen, waren diese Versuche demnach nicht geeignet, eine Wasserentkeimung erfolgreich durchzuführen. Erst nach dem erfindungsgemässen Verfahren und den entsprechenden Beispielen 1 bis 4 gelingt es, mit porösen Trägerfeststoff-Teilen eine Wasserentkeimung durchzuführen.

- 1 -

Patentansprüche

1. Verfahren zur Entkeimung von Wasser mit Chlor, dadurch gekennzeichnet, dass das kontaminierte Wasser mit Chlorgasbeladenen Trägerfeststoff-Teilen behandelt wird.

2. Verfahren nach Patentanspruch 1, dadurch gekennzeichnet, dass als Trägerfeststoff-Teile Molekularsiebe, Kieselgel, Aktivkohle, Aktivtonerde oder poröse keramische Körper angewendet werden.

3. Verfahren nach Patentanspruch 1 und 2, dadurch gekennzeichnet, dass als Molekularsiebe Zeolith angewendet wird.

4. Mittel zum Entkeimen von Wasser, dadurch gekennzeichnet, dass es Chlorgas-beladene Trägerfeststoff-Teile enthält.

**Europäisches Patentamt**

**EUROPÄISCHER RECHERCHENBERICHT**

0 110 148

Nummer der Anmeldung

EP 83 11 0765

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | GB-A- 493 069 (E. BERL) <br> * das ganze Dokument * | 1-4 | C 02 F 1/76 |
| A | FR-A- 814 972 (R. PIPAULT) <br> * das ganze Dokument * | 1-4 | |
| A | FR-A- 477 090 (H. KRIEGSHEIM) <br> * das ganze Dokument * | 1-4 | |
| A | US-A-3 429 808 (W.H. SMITH) <br> * das ganze Dokument * | 1-4 | |

RECHERCHIERTE SACHGEBIETE (Int. Cl. ³)

C 02 F

Der vorliegende Recherchenbericht wurde für alle Patentansprüche erstellt.

| Recherchenort <br> DEN HAAG | Abschlußdatum der Recherche <br> 16-02-1984 | Prüfer <br> VAN AKOLEYEN H.T.M. |
|---|---|---|